# EUROPEAN PATENT APPLICATION

(11) **EP 4 683 069 A1**
(43) Date of publication of application: **21.01.2026**
(21) Application number: 25183805.8
(22) Date of filing: 18.06.2025
(51) Int. Cl.: H01M 50/227, H01M 10/658, H01M 50/204, H01M 50/244, H01M 50/342, H01M 50/507

(54) **BATTERY MODULE**

(30) Priority: 26.06.2024 KR 20240083604
(71) Applicant: SAMSUNG SDI CO., LTD., Yongin-si, Gyeonggi-do 17084 (KR)
(72) Inventor: MOON, Soo Deok, Suwon-si 16678 (KR)
(74) Representative: Marks & Clerk LLP

(57) **Abstract**

A battery module includes a battery cell stack including a plurality of battery cells, a plurality of busbars electrically connecting the plurality of battery cells, and a module housing made of a synthetic resin material, and including a busbar holder portion supporting the plurality of busbars, and a sidewall portion surrounding side surfaces of the battery cell stack that does not face the busbar holder portion and connected to the busbar holder portion.

## Description

### BACKGROUND

### 1. Field

Aspects of embodiments of the present disclosure relate to a battery module.

### 2. Description of the Related Art

In general, as demand for portable electronic products, such as laptops, video cameras, and portable phones, increases rapidly and commercialization of robots, electric vehicles, and the like begins in earnest, research on high-performance secondary batteries capable of repeated charging and discharging is being actively conducted.

The secondary batteries are being widely used for driving and energy storage, not only in small devices such as portable electronic devices, but also in medium-to-large devices, such as electric vehicles and energy storage systems (ESS). In particular, in the case of the medium-to-large devices, one battery module can be configured in a form in which multiple battery cells are electrically connected to each other to improve the output and/or capacity of the battery.

The battery module may include a module housing in which a plurality of battery cells is accommodated. However, the module housing may include a pair of end plates disposed to be spaced apart from each other and a pair of side plates coupled to the pair of end plates by a method such as welding. Therefore, assembly productivity of the battery module including the module housing may be decreased, and costs may be increased.

### SUMMARY

According to an aspect of embodiments of the present invention, a battery module including a module housing that is integrally formed without being coupled using welding or fasteners and accommodates battery cells therein is provided.

The above and other aspects and features of the present disclosure will be described in or will be apparent from the following description of some embodiments of the present disclosure.

According to one or more embodiments of the present invention, a battery module includes a battery cell stack including a plurality of battery cells, a plurality of busbars electrically connecting the plurality of battery cells, and a module housing made of a synthetic resin material, and including a busbar holder portion supporting the plurality of busbars, and a sidewall portion around (e.g., surrounding) side surfaces of the battery cell stack that does not face the busbar holder portion and connected to the busbar holder portion.

The module housing may further include a reinforcing member that includes a material with a greater strength than the synthetic resin material and is integrally joined to the sidewall portion.

The reinforcing member may be made of a metal material.

The reinforcing member may include a thick-walled portion including a pair of parallel plate portions, and a plurality of rib portions that include a side and another side joined to the pair of parallel plate portions and are arranged to be spaced apart from each other.

The reinforcing member may include a plurality of thick-walled portions that are spaced apart from each other (e.g. spaced apart), and the reinforcing member may further include a plurality of thin-walled portions connecting the plurality of thick-walled portions.

A thin-walled portion of the plurality of thin-walled portions may include a pair of thin-walled portion parallel plate portions that are spaced apart by a distance smaller than a distance between the pair of parallel plate portions and are parallel to each other, and a plurality of thin-walled portion rib portions that have a side and another side joined to the pair of thin-walled portion parallel plate portions and spaced apart.

The reinforcing member may include a plurality of protrusions protruding from a side surface (e.g. a side) facing the battery cell stack or another side surface (e.g. another side) opposite to the side surface (e.g. the side).

The plurality of protrusions may protrude so as to be exposed to an outside of (e.g. outside) the sidewall portion.

A portion of the reinforcing member may be exposed to an outside of (e.g. outside) the sidewall portion.

The reinforcing member may be inserted in a mold for molding the module housing and joined to the sidewall portion by insert molding.

The module housing further may include a fastener passing boss that is integrally joined to the sidewall portion and is made of (e.g. includes) a material with a greater strength than the synthetic resin material, and the battery module may further include a fastener passing through the fastener passing boss.

The fastener passing boss may be inserted into a mold for forming the module housing and joined to the sidewall portion by insert molding.

The battery module may further include a cooling plate that cools the battery cell stack and is fastened to the fastener and coupled to the module housing.

The fastener may be fastened to a frame supporting the module housing.

A battery cell of the plurality of battery cells may include a cell vent configured to rupture to discharge gas from an inside of the battery cell to an outside, and the module housing may further include a potting material that closes a gas through hole (e.g. a gas hole) aligned with the cell vent and is configured to be melted or ruptured by a gas to open the gas through hole (e.g. gas hole).

A peripheral portion of the cell vent of the battery cell may be in contact with a peripheral portion of the potting material of the module housing.

The potting material may include at least one material selected from mica, an aerogel, and a ceramic.

The potting material may be inserted in a mold for forming the module housing and joined to the busbar holder portion by insert molding.

The battery module may further include an insulating wrapping including an insulating material and arranged around (e.g. surrounding) the battery cell stack.

A side surface of the insulating wrapping may be in contact with the battery cell stack, and another side surface of the insulating wrapping opposite to the side surface may be in contact with an inner surface of the sidewall portion.

At least some of the above and other features of the invention are set out in the claims.

### BRIEF DESCRIPTION OF THE DRAWINGS

The drawings attached to this specification illustrate some example embodiments of the present disclosure, and further describe aspects and features of the present disclosure together with the detailed description of the present disclosure. However, the present disclosure is not to be construed as being limited to the drawings.
FIG. 1 is an exploded perspective view of a battery module according to an embodiment of the present invention;
FIG. 2 is a perspective view showing a module housing of FIG. 1 viewed from below, which is a view showing a state in which a busbar is placed on the module housing;
FIG. 3 is an exploded perspective view of the module housing of FIG. 1;
FIG. 4 is a cross-sectional view along the line IV-IV of FIG. 1, which is a view showing a state in which the battery module is assembled;
FIG. 5 is an enlarged view of a region "V" of FIG. 4, which is a view showing a state in which a flame retardant material is melted by gas discharged through a cell vent of a battery cell;
FIG. 6 is a cross-sectional view along the line VI-VI of FIG. 2;
FIG. 7 is an exploded perspective view of a battery module according to another embodiment of the present invention;
FIG. 8 is an exploded perspective view of a module housing of FIG. 7;
FIG. 9 is a cross-sectional view along the line IX-IX of FIG. 8, which is a view showing the integrally joined module housing;
FIG. 10 is an enlarged view of a region "X" of FIG. 9;
FIG. 11 is an exploded perspective view of a module housing included in a battery module according to another embodiment of the present invention;
FIG. 12 is a cross-sectional view along the line XII-XII of FIG. 11;
FIG. 13 is an enlarged view of a region "XIII" of FIG. 12;
FIG. 14 is an exploded perspective view of a module housing included in a battery module according to another embodiment of the present invention;
FIG. 15 is a cross-sectional view along the line XV-XV of FIG. 14; and
FIG. 16 is an enlarged view of a region "XVI" of FIG. 15.

### DETAILED DESCRIPTION

Herein, some embodiments of the present disclosure will be described, in further detail, with reference to the accompanying drawings. The terms or words used in this specification and claims are not to be construed as being limited to the usual or dictionary meaning and are to be interpreted as having meaning and concept consistent with the technical idea of the present disclosure based on the principle that the inventor can be his/her own lexicographer to appropriately define the concept of the term.

The embodiments described in this specification and the configurations shown in the drawings are provided as some example embodiments of the present disclosure and do not necessarily represent all of the technical ideas, aspects, and features of the present disclosure. Accordingly, it is to be understood that there may be various equivalents and modifications that may replace or modify the embodiments described herein at the time of filing this application.

It is to be understood that when an element or layer is referred to as being "on," "connected to," or "coupled to" another element or layer, it may be directly on, connected, or coupled to the other element or layer, or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element, or the first element may be indirectly coupled or connected to the second element via one or more intervening elements.

In the figures, dimensions of the various elements, layers, etc. may be exaggerated for clarity of illustration. The same reference numerals designate the same or like elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B, and C," "at least one of A, B, or C," "at least one selected from a group of A, B, and C," or "at least one selected from among A, B, and C" are used to designate a list of elements A, B, and C, the phrase may refer to any and all suitable combinations or a subset of A, B, and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It is to be understood that, although the terms "first," "second," "third," etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It is to be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (e.g., rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It is to be further understood that the terms "includes," "including," "comprises," and/or "comprising," when used in this specification, specify the presence of stated features, integers, steps, operations, elements, and/or components, but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all sub-ranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein.

References to two compared elements, features, etc. as being "the same" may mean that they are the same or substantially the same. Thus, the phrase "the same" or "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being disposed (or located or positioned) on the "above (or below)" or "on (or under)" a component, it may mean that the arbitrary element is placed in contact with the upper (or lower) surface of the component and may also mean that another component may be interposed between the component and any arbitrary element disposed (or located or positioned) on (or under) the component.

In addition, it is to be understood that when an element is referred to as being "coupled," "linked," or "connected" to another element, the elements may be directly "coupled," "linked," or "connected" to each other, or one or more intervening elements may be present therebetween, through which the element may be "coupled," "linked," or "connected" to another element. In addition, when a part is referred to as being "electrically coupled" to another part, the part may be directly electrically connected to another part, or one or more intervening parts may be present therebetween such that the part and the another part are indirectly electrically connected to each other.

Throughout the specification, when "A and/or B" is stated, it means A, B, or A and B, unless otherwise stated. That is, "and/or" includes any or all combinations of a plurality of items enumerated. When "C to D" is stated, it means C or more and D or less, unless otherwise specified.

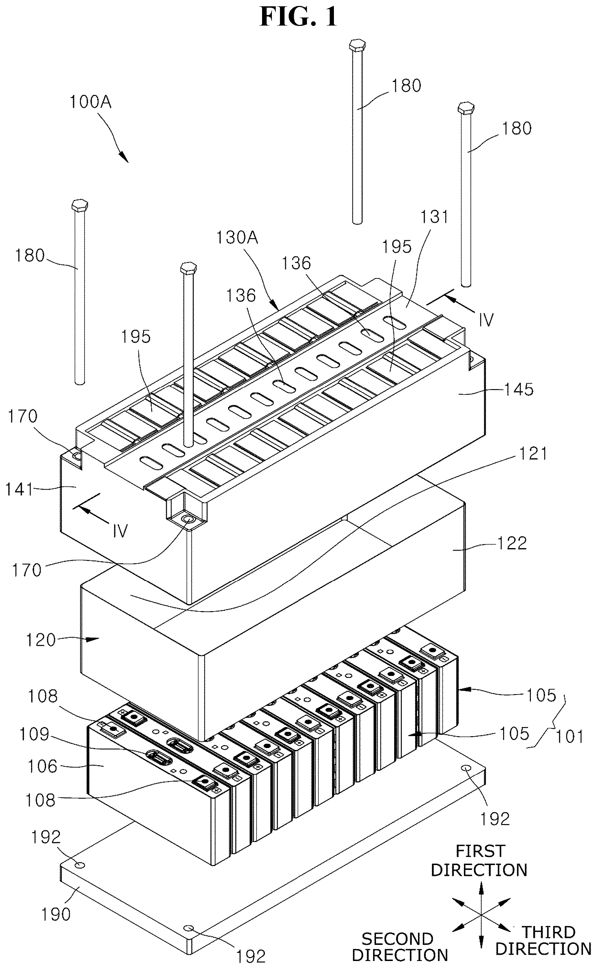

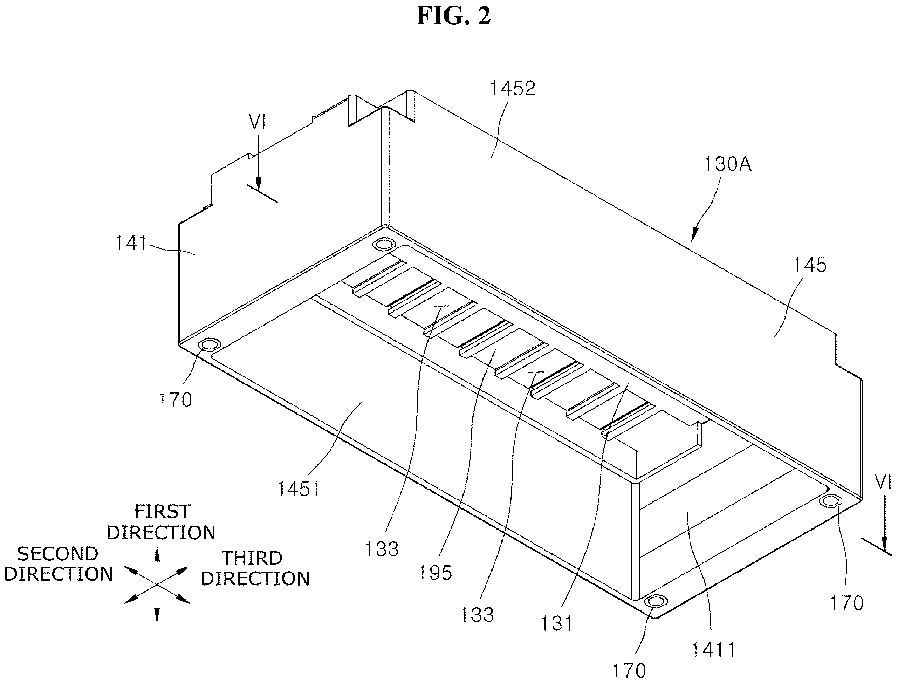

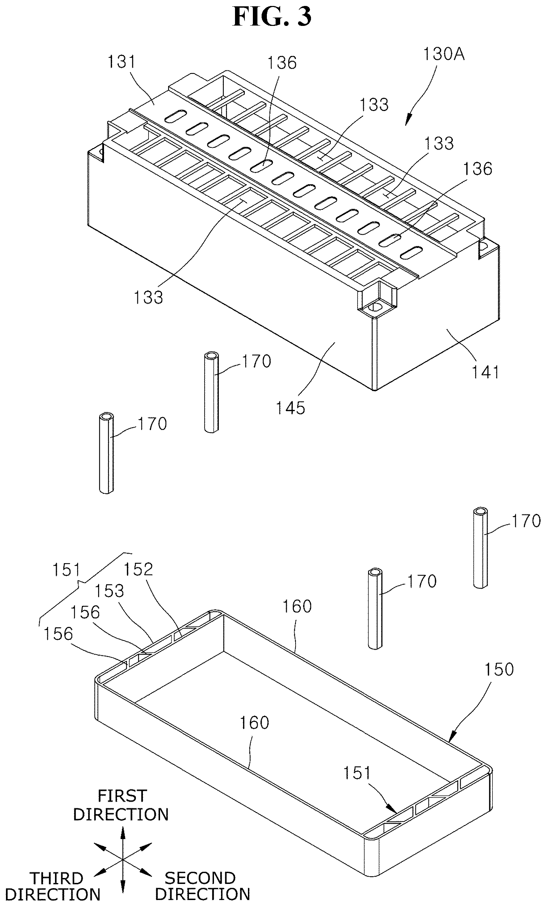

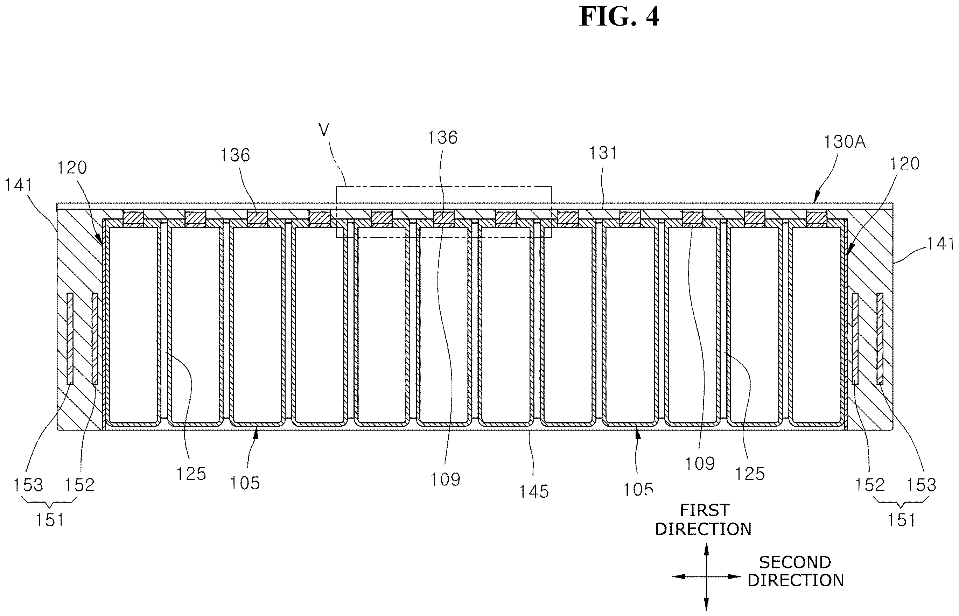

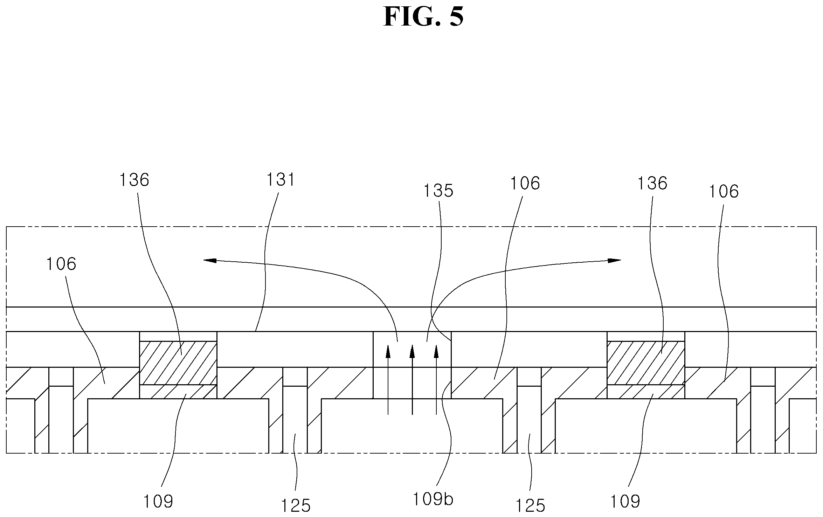

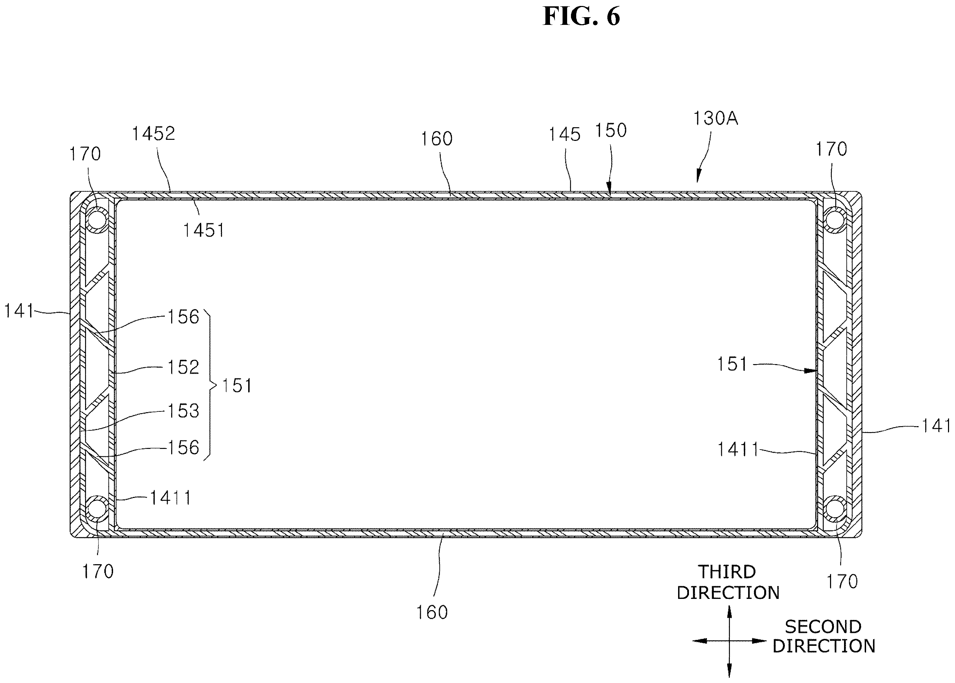

FIG. 1 is an exploded perspective view of a battery module according to an embodiment of the present invention; FIG. 2 is a perspective view showing a module housing of FIG. 1 viewed from below, which is a view showing a state in which a busbar is placed on the module housing; FIG. 3 is an exploded perspective view of the module housing of FIG. 1; FIG. 4 is a cross-sectional view along the line IV-IV of FIG. 1, which is a view showing a state in which the battery module is assembled; FIG. 5 is an enlarged view of a region "V" of FIG. 4, which is a view showing a state in which a flame retardant material is melted by gas discharged through a cell vent of a battery cell; and FIG. 6 is a cross-sectional view along the line VI-VI of FIG. 2.

Referring to FIGS. 1 to 6, a battery module 100A according to an embodiment of the present invention may include a battery cell stack 101, a plurality of busbars 195, and a module housing 130A. The battery cell stack 101 includes a plurality of battery cells 105. The battery cell 105 may serve as a unit structure for storing and supplying power in the battery module 100A.

Each of the plurality of battery cells 105 may include a cell vent 109. Each battery cell 105 may further include a cell case 106, a pair of cell terminals 108, and an electrode assembly (not shown).

The electrode assembly may be accommodated inside the cell case 106. The electrode assembly may be formed by winding or stacking a laminate of a first electrode plate, a separator, and a second electrode plate that are formed in a thin plate or film form.

In an embodiment, if the electrode assembly is a wound laminate, a winding axis may be parallel to a longitudinal direction of the cell case 106. In another embodiment, the electrode assembly may be a stack type rather than a winding type, and a shape of the electrode assembly is not limited in the present invention. In another embodiment, the electrode assembly may be a Z-stack electrode assembly in which a positive electrode plate and a negative electrode plate are inserted into both, or opposite, sides of the separator folded in a Z-stack. In addition, one or more electrode assemblies may be stacked such that long side surfaces thereof are adjacent to each other and accommodated inside a case; however, a number of electrode assemblies is not limited in the present invention. The first electrode plate of the electrode assembly may serve as a negative electrode, and the second electrode plate may serve as a positive electrode. However, the opposite is also possible.

The first electrode plate may be formed by applying a first electrode active material, such as graphite or carbon, on a first electrode current collector plate formed of a metal foil, such as copper, a copper alloy, nickel, or a nickel alloy, and may include a first electrode tab (or a first uncoated portion) which is an area where the first electrode active material is not applied. The first electrode tab may function as a path for a current flow between the first electrode plate and the first current collector. In some examples, the first electrode tab may be formed by cutting the first electrode plate to protrude to a side portion in advance when manufacturing the first electrode plate, and may protrude further to a side portion than the separator without separate cutting.

The second electrode plate may be formed by applying a second electrode active material, such as a transition metal oxide, on a second electrode current collector plate formed of a metal foil, such as aluminium or an aluminium alloy, and may include a second electrode tab (or a second uncoated portion) which is an area where the second electrode active material is not applied. The second electrode tab may function as a path for a current flow between the second electrode plate and the second current collector. In some examples, the second electrode tab may be formed by cutting the second electrode plate to protrude to the another side portion in advance when manufacturing the second electrode plate, and may protrude further to the another side portion than the separator without separate cutting.

In some examples, the first electrode tab may be located on a left end side of the electrode assembly, and the second electrode tab may be located on a right end side of the electrode assembly or the first electrode tab and the second electrode tab may be located on a side in the same direction. Here, left and right are referred to for convenience of explanation, and the positions may change when the battery cell 105 rotates left-right or up-down.

The first electrode tab of the first electrode plate and the second electrode tab of the second electrode plate may be respectively located at both, or opposite, end portions of the electrode assembly. In some examples, the electrode assembly may be accommodated in the case along with an electrolyte. In addition, in the electrode assembly, the first current collector and the second current collector may be respectively positioned by being respectively welded and connected to the first electrode tab of the first electrode plate and the second electrode tab of the second electrode plate, which are exposed at both, or opposite, sides thereof.

In an embodiment, the cell case 106 may have a substantially rectangular parallelepiped shape and accommodate the electrode assembly and an electrolyte therein. In an embodiment, the cell case 106 may include a metal can with an open side and a cap plate that closes the open side of the metal can. A pair of cell terminals 108 may be installed on the cap plate to protrude outward from the cap plate. The pair of cell terminals 108 may protrude in a first direction.

A cell terminal 108 of the pair of cell terminals 108 may be electrically connected to a current collector of the first current collector and the second current collector, and another cell terminal 108 may be electrically connected to another of the first current collector and the second current collector. Therefore, a cell terminal 108 of the pair of cell terminals 108 may be a positive electrode terminal, and the other cell terminal 108 may be a negative electrode terminal.

The pair of cell terminals 108 may be located at both, or opposite, end portions in a longitudinal direction of the cap plate, and the cell vent 109 may be located between the pair of cell terminals 108 on the cap plate. When high-temperature gas and flames are generated inside the cell case 106 due to reasons such as overcharging or abnormal operation, the cell vent 109 may rupture and discharge an emission such as gas, flames, and the like from the inside of the cell case 106 to the outside.

In an embodiment, the battery cell 105 may be a prismatic battery cell in which the pair of cell terminals 108 protrude from an outer surface of the cell case where the cell vent 109 is formed. A plurality of cell vents 109 may be provided in the cell case 106 to face the first direction.

The battery cell stack 101 may include the plurality of battery cells 105 arranged in a row in a second direction. Accordingly, the plurality of cell vents 109 may be arranged in a line in the second direction. An insulating sheet 125 may be interposed between the cell cases 106 of a pair of adjacent battery cells 105 among the plurality of battery cells 105.

The pair of cell terminals 108 and the cell vent 109 included in each battery cell 105 may be arranged along a third direction. The cell vent 109 may be disposed between the pair of cell terminals 108.

The second direction may be a direction orthogonal to the first direction, and the third direction may be a direction orthogonal to the first direction and the second direction. For example, the first direction may be a vertical direction, the second direction may be a front-back direction, and the third direction may be a left-right direction.

The plurality of busbars 195 electrically connects a plurality of battery cells 105. For example, the plurality of busbars 195 electrically connect a pair of adjacent battery cells 105 among the plurality of battery cells 105. In an embodiment, the plurality of busbars 195 may be arranged in two rows in the second direction. The plurality of cell vents 109 arranged in a row may be disposed between the plurality of busbars 195 arranged in two rows.

The module housing 130A may include a busbar holder portion 131 and sidewall portions 141 and 145. The busbar holder portion 131 and the sidewall portions 141 and 145 may be made of a synthetic resin material and may be integrally connected so as not to be separated. In an embodiment, the busbar holder portion 131 and the sidewall portions 141 and 145 may be formed by an injection molding method of injecting a molten synthetic resin material into a mold for molding the module housing 130A and hardening the same.

The busbar holder portion 131 may support the plurality of busbars 195. The busbar holder portion 131 may be provided with a plurality of cell terminal windows 133 corresponding one-to-one to the plurality of cell terminals 108 provided in the battery cell stack 101. When the battery cell stack 101 is accommodated inside the module housing 130A, the plurality of cell terminals 108 and the plurality of cell terminal windows 133 may be aligned in the first direction. The plurality of busbars 195 may be supported by being placed on the busbar holder portion 131 and welded to the cell terminals 108 through the cell terminal windows 133.

When high-temperature gas is generated inside the battery cell 105 due to a reason such as overcharging, the cell vent 109 may rupture such that gas is discharged from an inside of the battery cell 105, that is, the inside of the cell case 106, to the outside.

The module housing 130A may further include a potting material 136 that closes a gas through hole 135 located to be aligned with the cell vent 109 and is melted or ruptured by gas discharged from the inside of the cell vent 109 to the outside to open the gas through hole 135. The potting material 136 may be installed on the busbar holder portion 131.

As shown in FIGS. 4 and 5, a plurality of potting materials 136 may be provided to correspond one-to-one to the plurality of cell vents 109 provided in the battery cell stack 101. Each potting material 136 may be aligned with a corresponding cell vent 109 in the first direction. The potting material 136 may be formed of a material with excellent heat resistance, such as mica, an aerogel, or a ceramic. For example, the potting material 136 may include at least one of mica, an aerogel, or a ceramic.

As shown in FIG. 5, when the cell vent 109 ruptures due to high-temperature gas or flames generated inside a battery cell 105 among the plurality of battery cells 105, the potting material 136 aligned with the ruptured cell vent 109 may be melted or ruptured by the temperature and pressure of the gas such that the gas through hole 135 may be formed in the module housing 130A, for example, in the busbar holder portion 131. The high-temperature gas or flames may be discharged to the outside of the module housing 130A through the ruptured cell vent 109 and the gas through hole 135.

When the battery cell stack 101 is accommodated inside the module housing 130A, a peripheral portion of the cell vent 109 in the battery cell 105 may be in contact (e.g., close contact) with a peripheral portion of the potting material 136 in the module housing 130A. For example, a portion of the cell case 106 near the cell vent 109 may be in contact (e.g., close contact) with a portion of the busbar holder portion 131 near the potting material 136, and the portions in contact (e.g., close contact) may surround the cell vent 109 and the potting material 136.

In this case, when high-temperature gas or flames generated inside a battery cell 105 among the plurality of battery cells 105 are generated, the gas and flames are quickly discharged to the outside of the module housing 130A through flow paths 109b formed due to the cell vent 109 being ruptured and the gas through hole 135 opened due to the potting material 136 being melted or ruptured and do not flow to neighboring battery cells 105 inside the module housing 130A. Therefore, propagation and spread of fire and explosion can be delayed.

The sidewall portions 141 and 145 may surround side surfaces of the battery cell stack 101 that do not face the busbar holder portion 131 and may be connected to the busbar holder portion 131. The sidewall portions 141 and 145 may include a pair of end sidewall portions 141 and a pair of side sidewall portions 145.

The pair of end sidewall portions 141 may extend by being bent at edges of both, or opposite, end portions of the busbar holder portion 131 in the second direction. In an embodiment, a shape of the end sidewall portion 141 may be a flat plate shape orthogonal to the second direction.

The pair of side sidewall portions 145 may extend by being bent at edges of both, or opposite, end portions of the busbar holder portion 131 in the third direction. In an embodiment, a shape of the side sidewall portion 145 may be a flat plate shape orthogonal to the third direction. In an embodiment, the pair of end sidewall portions 141 and the pair of side sidewall portions 145 may be integrally connected so as not to be separated.

The module housing 130A may further include a reinforcing member 150. In an embodiment, the reinforcing member 150 may be integrally joined to the sidewall portions 141 and 145. The reinforcing member 150 can increase the rigidity of the sidewall portions 141 and 145. The reinforcing member 150 may include a material with a greater strength than the synthetic resin material that is a material of the busbar holder portion 131 and the sidewall portions 141 and 145. For example, the material of the reinforcing member 150 may be a metal, such as steel.

The reinforcing member 150 may include a thick-walled portion 151 and a thin-walled portion 160. In an embodiment, the thick-walled portion 151 may be integrally joined to the end sidewall portion 141, and the thin-walled portion 160 may be integrally joined to the side sidewall portion 145.

The thick-walled portion 151 and the thin-walled portion 160 may each be provided in plural. For example, a pair of thick-walled portions 151 may be provided to correspond one-to-one to the end sidewall portions 141, and a pair of thin-walled portions 160 may be provided to correspond one-to-one to the side sidewall portions 145.

The thick-walled portion 151 may include a pair of parallel plate portions 152 and 153 and a plurality of rib portions 156. The pair of parallel plate portions 152 and 153 may include a first parallel plate portion 152 and a second parallel plate portion 153 that are parallel to each other. In an embodiment, shapes of the first parallel plate portion 152 and the second parallel plate portion 153 may be flat plate shapes orthogonal to the second direction, and the first parallel plate portion 152 and the second parallel plate portion 153 may extend in the third direction. The plurality of rib portions 156 may have a side and another side joined to the first parallel plate portion 152 and the second parallel plate portion 153 and may be disposed to be spaced apart from each other.

Shapes of the pair of thin-walled portions 160 may be flat plate shapes orthogonal to the third direction, and the pair of thin-walled portions 160 may extend in the second direction. The pair of thin-walled portions 160 may connect the pair of thick-walled portions 151. For example, both, or opposite, end portions of the pair of thick-walled portions 151 in the third direction may be connected to both, or opposite, end portions of the pair of thin-walled portions 160 in the second direction.

In an embodiment, the thick-walled portion 151 may be embedded in the end sidewall portion 141 so as not to be exposed to an inner surface 1411 and an outer surface of the end sidewall portion 141 in the thickness direction. The thin-walled portion 160 may be embedded in the side sidewall portion 145 so as not to be exposed to an inner surface 1451 and an outer surface 1452 of the side sidewall portion 145 in the thickness direction.

In an embodiment, the reinforcing member 150 is made of a metal material, and the reinforcing member 150 has better thermal conductivity than the sidewall portions 141 and 145 and the busbar holder portion 131 that are made of a synthetic resin material, thereby improving heat dissipation performance in which heat generated during the charging and discharging of the battery cell stack 101 is discharged to the outside of the module housing 130A.

The module housing 130A may further include a fastener passing boss 170. In an embodiment, the fastener passing boss 170 may be integrally joined to the sidewall portions 141 and 145. The fastener passing boss 170 may include a material with a greater strength than the synthetic resin material that is a material of the busbar holder portion 131 and the sidewall portions 141 and 145. For example, the material of the fastener passing boss 170 may be a metal, such as steel.

A shape of the fastener passing boss 170 may be a tube shape extending in the first direction and having a hollow therein. A plurality of fastener passing bosses 170 may be provided. The plurality of fastener passing bosses 170 may pass through both, or opposite, longitudinal end portions of the thick-walled portions 151 in the first direction.

In an embodiment, the potting material 136, the reinforcing member 150, and the fastener passing boss 170 may be inserted into a mold for molding the module housing 130A and joined to the busbar holder portion 131 or the sidewall portions 141 and 145 made of a synthetic resin material by insert molding.

In an embodiment, for example, a mold with a cavity corresponding to a shape of the module housing 130A is prepared, the potting material 136, the reinforcing member 150, and the fastener passing boss 170 are inserted into the mold at fixed positions, a molten synthetic resin is injected into the cavity, and the module housing 130A may be molded by cooling the molten synthetic resin such that molten synthetic resin is hardened.

The battery module 100A may further include a fastener 180 passing through the hollow of the fastener passing boss 170. For example, the fastener 180 may include a bolt passing through the hollow of the fastener passing boss 170 and having a male thread pattern formed on an outer circumferential surface thereof. A plurality of fasteners 180 may be provided to correspond one-to-one to the plurality of fastener passing bosses 170.

In an embodiment, the battery module 100A may further include a cooling plate 190 for cooling the battery cell stack 101. For example, the cooling plate 190 may be disposed under the module housing 130A in the first direction.

A fastener coupling hole 192 into which an end portion of the fastener 180 is inserted and fastened may be formed in the cooling plate 190. A plurality of fastener coupling holes 192 may be provided to correspond one-to-one to the plurality of fasteners 180. A female thread pattern that engages with the male thread pattern of the fastener 180 may be formed on an inner circumferential surface of the fastener coupling hole 192.

The end portion of the fastener 180 passing through the fastener passing boss 170 may be fitted into the fastener coupling hole 192 and coupled such that the cooling plate 190 may be coupled to the module housing 130A.

In an embodiment, the battery module 100A may further include an insulating wrapping 120 around (e.g., surrounding) the battery cell stack 101. The insulating wrapping 120 may include an insulating material. For example, the insulating wrapping 120 may be formed by wrapping a tape made of an insulating material around the battery cell stack 101.

A first side surface 121 of the insulating wrapping 120 may be in contact (e.g., close contact) with the battery cell stack 101, and a second side surface 122 opposite to the first side surface 121 of the insulating wrapping 120 may be in contact (e.g., close contact) with inner surfaces 1411 and 1451 of the sidewall portions 141 and 145. For example, the first side surface 121 and the second side surface 122 of the insulating wrapping 120 may be an inner surface and an outer surface of the insulating wrapping 120.

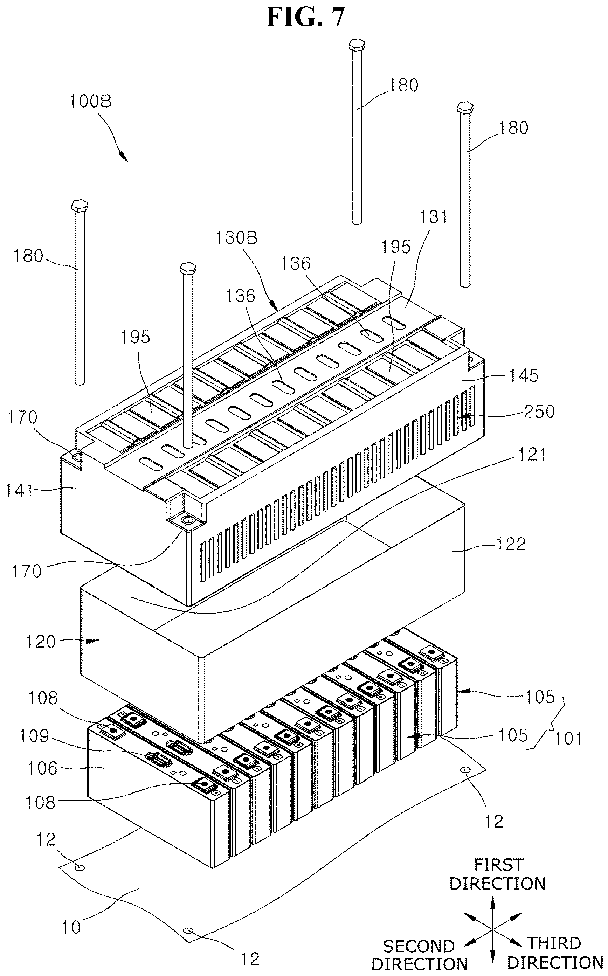

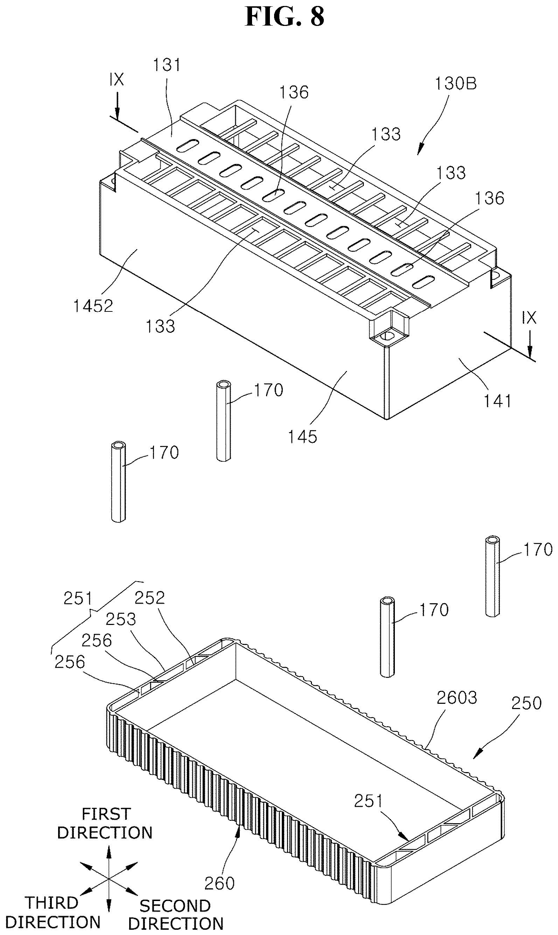

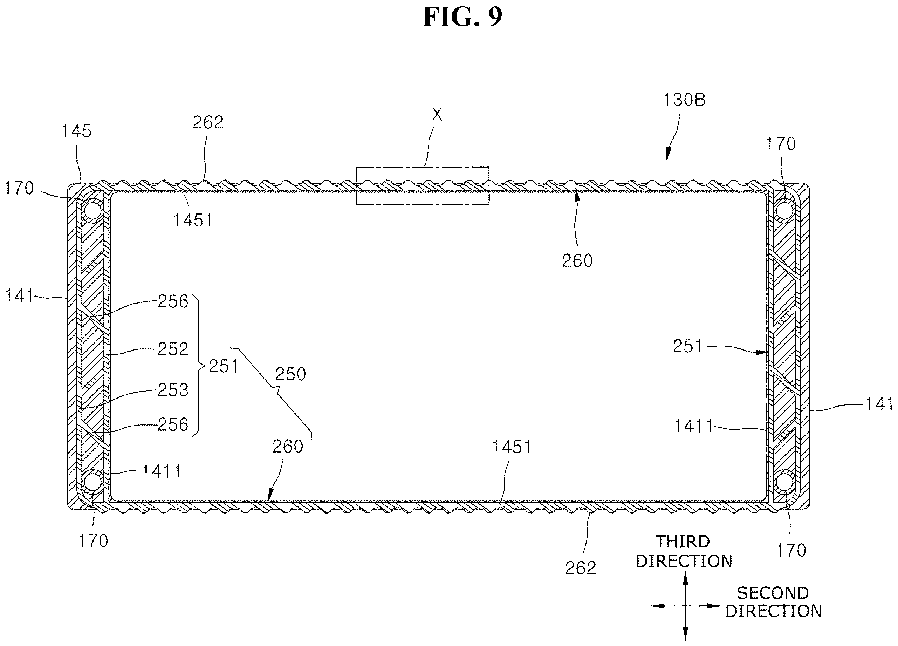

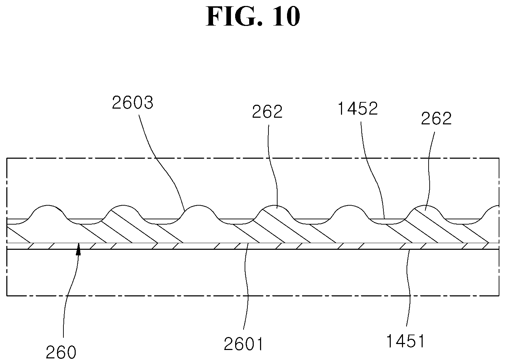

FIG. 7 is an exploded perspective view of a battery module according to another embodiment of the present invention; FIG. 8 is an exploded perspective view of a module housing of FIG. 7; FIG. 9 is a cross-sectional view along the line IX-IX of FIG. 8, which is a view showing the integrally joined module housing; and FIG. 10 is an enlarged view of a region "X" of FIG. 9.

Referring to FIGS. 7 to 10, a battery module 100B according to the present embodiment of the present invention may include a battery cell stack 101, a busbar 195, a module housing 130B, a fastener 180, and an insulating wrapping 120. The battery cell stack 101, the busbar 195, the fastener 180, and the insulating wrapping 120 are denoted by the same reference numerals as the battery cell stack 101, the busbar 195, the fastener 180, and the insulating wrapping 120 included in the battery module 100A according to the previously described embodiment of the present invention, and their configurations may also be the same, and further descriptions of duplicate components will be omitted.

The module housing 130B may include a busbar holder portion 131, sidewall portions 141 and 145, a potting material 136, a reinforcing member 250, and a fastener passing boss 170. The busbar holder portion 131, the sidewall portions 141 and 145, the potting material 136, and the fastener passing boss 170 are indicated by the same reference numerals as the busbar holder portion 131, the sidewall portions 141 and 145, the potting material 136, and the fastener passing boss 170 included in the module housing 130A of the battery module 100A according to the previously described embodiment of the present invention, and their configurations may be the same, and descriptions of these duplicate components will be omitted.

In an embodiment, the reinforcing member 250 may be integrally joined to the sidewall portions 141 and 145. The reinforcing member 250 can increase the rigidity of the sidewall portions 141 and 145. The reinforcing member 250 may include a material with a greater strength than the synthetic resin material that is a material of the busbar holder portion 131 and the sidewall portions 141 and 145. For example, the material of the reinforcing member 250 may be a metal, such as steel.

The reinforcing member 250 may include a thick-walled portion 251 and a thin-walled portion 260. In an embodiment, the thick-walled portion 251 may be integrally joined to the end sidewall portions 141, and the thin-walled portion 260 may be integrally joined to the side sidewall portions 145.

The thick-walled portion 251 and the thin-walled portion 260 may each be provided in plural. For example, a pair of thick-walled portions 251 may be provided to correspond one-to-one to the end sidewall portions 141, and a pair of thin-walled portions 260 may be provided to correspond one-to-one to the side sidewall portions 145.

The thick-walled portion 251 may include a pair of parallel plate portions 252 and 253 and a plurality of rib portions 256. The pair of parallel plate portions 252 and 253 may include a first parallel plate portion 252 and a second parallel plate portion 253 that are parallel to each other. In an embodiment, shapes of the first parallel plate portion 252 and the second parallel plate portion 253 may be flat plate shapes orthogonal to the second direction, and the first parallel plate portion 252 and the second parallel plate portion 253 may extend in the third direction. The plurality of rib portions 256 may have a side and another side joined to the first parallel plate portion 252 and the second parallel plate portion 253 and may be disposed to be spaced apart from each other.

A pair of thin-walled portions 260 may extend in the second direction. The pair of thin-walled portions 260 may connect the pair of thick-walled portions 251. For example, both, or opposite, end portions of the pair of thick-walled portions 251 in the third direction may be connected to both, or opposite, end portions of the pair of thin-walled portions 260 in the second direction.

The thin-walled portion 260 includes a side surface 2601 facing the battery cell stack 101 accommodated in the module housing 130B and another side surface 2603 opposite to the one side surface 2601. Herein, the side surface 2601 may be referred to as an inner surface of the thin-walled portion 260 and another side surface 2603 may be referred to as an outer surface of the thin-walled portion 260. The thin-walled portion 260 may include a plurality of protrusions 262 protruding from the outer surface 2603. However, the embodiments are not limited thereto, and the thin-walled portion 260 may also include a plurality of protrusions protruding from the inner surface 2601.

In an embodiment, the outer surface 2603 includes the plurality of protrusions 262, and the outer surface 2603 may be referred to as an uneven surface. In an embodiment, a cross-sectional shape of the outer surface 2603 on which the plurality of protrusions 262 are formed may have a waveform shape, such as a sine wave, and the inner surface 2601 may have a shape of a flat plane.

The plurality of protrusions 262 may protrude so as to be exposed to the outside of the side sidewall portion 145. For example, the plurality of protrusions 262 may be exposed to the outside of the side sidewall portion 145 through the outer surface 1452 of the side sidewall portion 145. The inner surface 2601 of the thin-walled portion 260 does not protrude to the outside of the side sidewall portion 145 through the inner surface 1451 of the side sidewall portion 145 and may be embedded in the side sidewall portion 145. The thick-walled portion 251 may be embedded in the end sidewall portion 141 so as not to be exposed to an inner surface 1411 and an outer surface of the end sidewall portion 141 in the thickness direction.

In an embodiment, the reinforcing member 250 is made of a metal material, and the reinforcing member 250 may have greater thermal conductivity than the sidewall portions 141 and 145 and the busbar holder portion 131 that are made of a synthetic resin material, thereby improving heat dissipation performance in which heat generated during the charging and discharging of the battery cell stack 101 is discharged to the outside of the module housing 130B.

As shown in FIGS. 9 and 10, a surface area of the thin-walled portion 260 may be expanded due to the plurality of protrusions 262 and the plurality of protrusions 262 may be exposed to the outside of the side sidewall portion 145, thereby further improving the heat dissipation performance of the module housing 130B included in the second embodiment of the present invention compared to the heat dissipation performance of the module housing 130A included in the previously described embodiment of the present invention.

In addition, due to the plurality of protrusions 262, a thickness of the thin-walled portion 260 may also be greater than a thickness of the thin-walled portion 160 of the reinforcing member 150 included in the previously described embodiment of the present invention, thereby further increasing the rigidity of the module housing 130B included in the present embodiment of the present invention compared to the rigidity of the module housing 130A included in the previously described embodiment of the present invention.

A plurality of fastener passing bosses 170 may be provided. The plurality of fastener passing bosses 170 may pass through both, or opposite, longitudinal end portions of the thick-walled portions 251 in the first direction.

In an embodiment, the potting material 136, the reinforcing member 250, and the fastener passing boss 170 may be inserted into a mold for molding the module housing 130B and joined to the busbar holder portion 131 or the sidewall portions 141 and 145 made of a synthetic resin material by insert molding.

In an embodiment, the fastener 180 may be fastened to a frame 10 supporting the module housing 130B. For example, the frame 10 may be included in a battery pack or an energy storage system (ESS) in which a plurality of battery modules 100B are accommodated.

A fastener coupling hole 12 into which an end portion of the fastener 180 is inserted and fastened may be formed in the frame 10. A plurality of fastener coupling holes 12 may be provided to correspond one-to-one to the plurality of fasteners 180. A female thread pattern that engages with the male thread pattern of the fastener 180 may be formed on an inner circumferential surface of the fastener coupling hole 12.

The end portion of the fastener 180 passing through the fastener passing boss 170 may be fitted into the fastener coupling hole 12 and coupled such that the module housing 130B may be coupled to the frame 10.

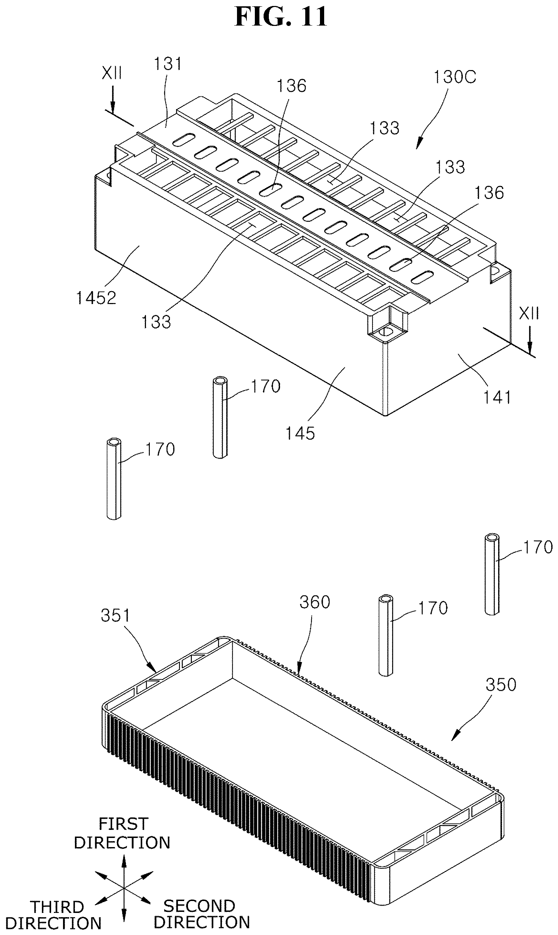

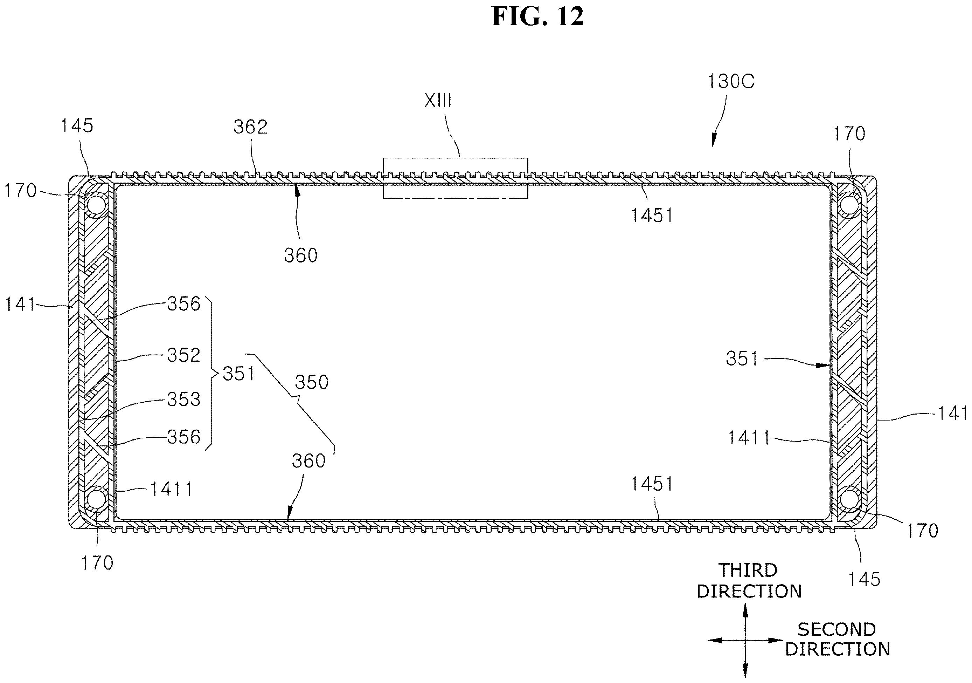

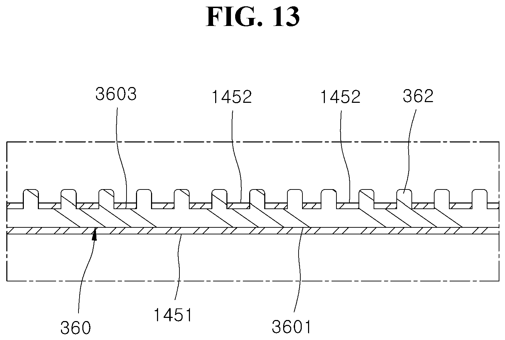

FIG. 11 is an exploded perspective view of a module housing included in a battery module according to another embodiment of the present invention; FIG. 12 is a cross-sectional view along the line XII-XII of FIG. 11; and FIG. 13 is an enlarged view of a region "XIII" of FIG. 12.

Among components of the battery module according to the present embodiment of the present invention, components except for the module housing may have the same configuration as the corresponding components included in the battery module 100A or 100B according to the previously described embodiments of the present invention described with reference to FIGS. 1 to 10, and descriptions of the duplicate components will be omitted.

Referring to FIGS. 11 to 13, a module housing 130C included in the battery module according to the present embodiment of the present invention may include a busbar holder portion 131, sidewall portions 141 and 145, a potting material 136, a reinforcing member 350, and a fastener passing boss 170. The busbar holder portion 131, the sidewall portions 141 and 145, the potting material 136, and the fastener passing boss 170 are indicated by the same reference numerals as the busbar holder portion 131, the sidewall portions 141 and 145, the potting material 136, and the fastener passing boss 170 included in the module housing 130A of the battery module 100A according to the embodiment of FIG. 1, and their configurations may also the same, and further description of these duplicate components will be omitted.

In an embodiment, the reinforcing member 350 may be integrally joined to the sidewall portions 141 and 145. The reinforcing member 350 can increase the rigidity of the sidewall portions 141 and 145. The reinforcing member 350 may include a material with a greater strength than the synthetic resin material that is a material of the busbar holder portion 131 and the sidewall portions 141 and 145. For example, the material of the reinforcing member 350 may be a metal, such as steel.

The reinforcing member 350 may include a thick-walled portion 351 and a thin-walled portion 360. In an embodiment, the thick-walled portion 351 may be integrally joined to the end sidewall portion 141, and the thin-walled portion 360 may be integrally joined to the side sidewall portion 145.

The thick-walled portion 351 and the thin-walled portion 360 may each be provided in plural. For example, a pair of thick-walled portions 351 may be provided to correspond one-to-one to the end sidewall portions 141, and a pair of thin-walled portions 360 may be provided to correspond one-to-one to the side sidewall portions 145.

The thick-walled portion 351 may include a pair of parallel plate portions 352 and 353 and a plurality of rib portions 356. The pair of parallel plate portions 352 and 353 may include a first parallel plate portion 352 and a second parallel plate portion 353 that are parallel to each other. The shapes of the first parallel plate portion 352 and the second parallel plate portion 353 may be flat plate shapes orthogonal to the second direction, and the first parallel plate portion 352 and the second parallel plate portion 353 may extend in the third direction. The plurality of rib portions 356 may have a side and another side joined to the first parallel plate portion 352 and the second parallel plate portion 353 and may be disposed to be spaced apart from each other.

The pair of thin-walled portions 360 may extend in the second direction. The pair of thin-walled portions 360 may connect the pair of thick-walled portions 351. For example, both, or opposite, end portions of the pair of thick-walled portions 351 in the third direction may be connected to both, or opposite, end portions of the pair of thin-walled portions 360 in the second direction. However, the embodiments are not limited thereto, and the thin-walled portion 360 may also include a plurality of protrusions protruding from the inner surface 3601.

The thin-walled portion 360 includes a side surface 3601 facing the battery cell stack 101 accommodated in the module housing 130C and another side surface 3603 opposite to the side surface 3601. Herein, the side surface 3601 may be referred to as an inner surface of the thin-walled portion 360 and the another side surface 3603 may be referred to as an outer surface of the thin-walled portion 360. The thin-walled portion 360 may include a plurality of protrusions 362 protruding from the outer surface 3603.

The outer surface 3603 includes the plurality of protrusions 362, and the outer surface 2603 may be referred to as an uneven surface. In an embodiment, a cross-sectional shape of the outer surface 3603 on which the plurality of protrusions 362 is formed may be a waveform shape, such as a rectangular pulse wave shape or a parabolic pulse wave shape. The inner surface 3601 may be a flat plane.

The plurality of protrusions 362 may protrude so as to be exposed to the outside of the side sidewall portion 145. For example, the plurality of protrusions 362 may be exposed to the outside of the side sidewall portion 145 through the outer surface 1452 of the side sidewall portion 145. The inner surface 3601 of the thin-walled portion 360 does not protrude to the outside of the side sidewall portion 145 through the inner surface 1451 of the side sidewall portion 145 and may be embedded in the side sidewall portion 145. The thick-walled portion 351 may be embedded in the end sidewall portion 141 so as not to be exposed to an inner surface 1411 and an outer surface of the end sidewall portion 141 in the thickness direction.

In an embodiment, the reinforcing member 350 is made of a metal material, and the reinforcing member 350 may have greater thermal conductivity than the sidewall portions 141 and 145 and the busbar holder portion 131 that are made of a synthetic resin material, thereby improving heat dissipation performance in which heat generated during the charging and discharging of the battery cell stack 101 is discharged to the outside of the module housing 130C.

As shown in FIGS. 12 and 13, a surface area of the thin-walled portion 360 may be expanded due to the plurality of protrusions 362 and the plurality of protrusions 362 may be exposed to the outside of the side sidewall portion 145, thereby further improving the heat dissipation performance of the module housing 130C included in the present embodiment of the present invention compared to the heat dissipation performance of the module housing 130A included in the embodiment of FIG. 1.

In addition, due to the plurality of protrusions 362, a thickness of the thin-walled portion 360 may also be greater than a thickness of the thin-walled portion 160 of the reinforcing member 150 included in the embodiment of FIG. 1, thereby further increasing the rigidity of the module housing 130C included in the present embodiment of the present invention compared to the rigidity of the module housing 130A included in the embodiment of FIG. 1.

A plurality of fastener passing bosses 170 may be provided. The plurality of fastener passing bosses 170 may pass through both, or opposite, longitudinal end portions of the thick-walled portions 351 in the first direction.

The potting material 136, the reinforcing member 350, and the fastener passing boss 170 may be inserted into a mold for molding the module housing 130C and joined to the busbar holder portion 131 or the sidewall portions 141 and 145 made of a synthetic resin material by insert molding.

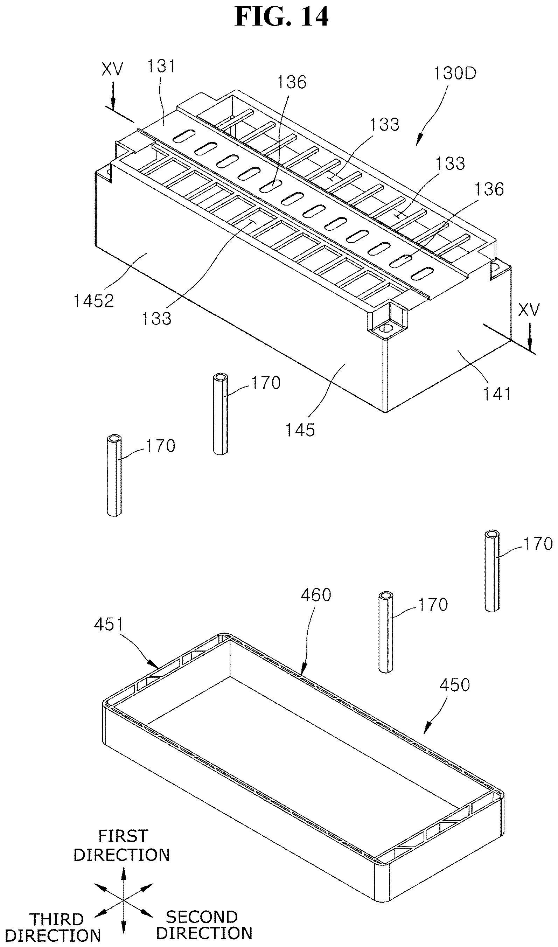

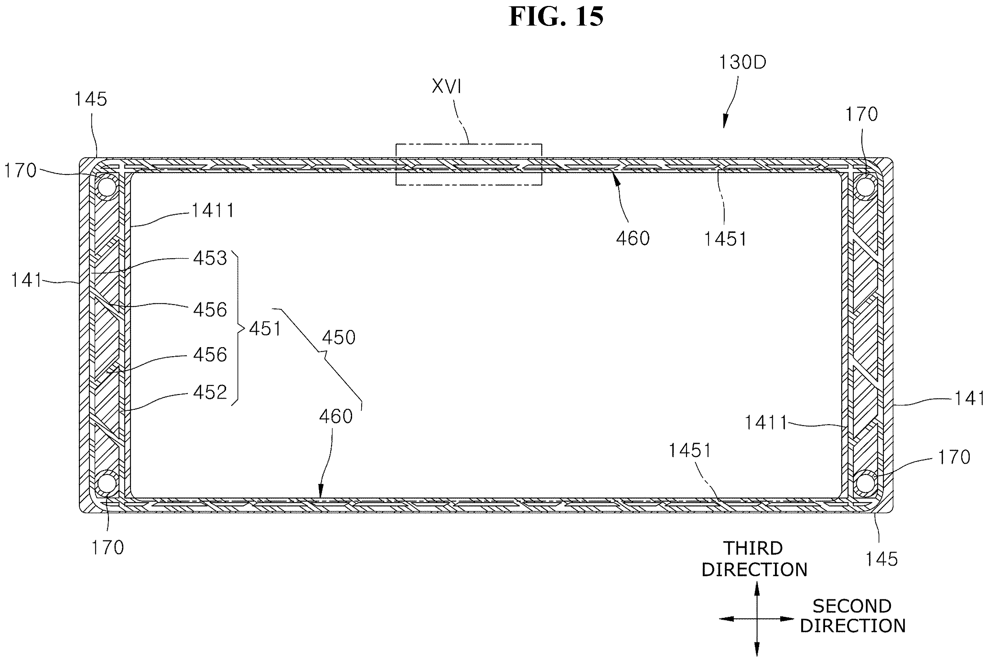

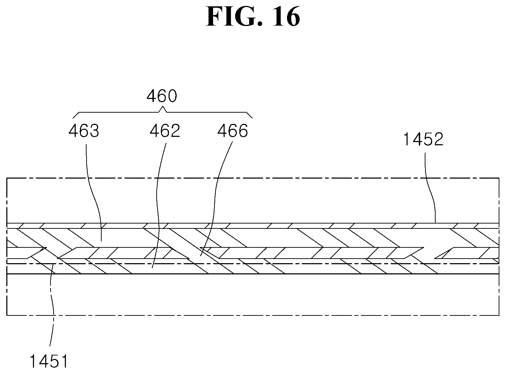

FIG. 14 is an exploded perspective view of a module housing included in a battery module according to another embodiment of the present invention; FIG. 15 is a cross-sectional view along the line XV-XV of FIG. 14; and FIG. 16 is an enlarged view of a region "XVI" of FIG. 15.

Referring to FIGS. 14 to 16, a module housing 130D included in the battery module according to the present embodiment of the present invention may include a busbar holder portion 131, sidewall portions 141 and 145, a potting material 136, a reinforcing member 450, and a fastener passing boss 170. The busbar holder portion 131, the sidewall portions 141 and 145, the potting material 136, and the fastener passing boss 170 are denoted by the same reference numerals as the busbar holder portion 131, the sidewall portions 141 and 145, the potting material 136, and the fastener passing boss 170 included in the module housing 130A of the battery module 100A according to the embodiment of FIG. 1, and their configurations may also be the same, and further descriptions of these duplicate components will be omitted.

In an embodiment, the reinforcing member 450 may be integrally joined to the sidewall portions 141 and 145. The reinforcing member 450 can increase the rigidity of the sidewall portions 141 and 145. The reinforcing member 450 may include a material with a greater strength than the synthetic resin material that is a material of the busbar holder portion 131 and the sidewall portions 141 and 145. For example, the material of the reinforcing member 450 may be a metal, such as steel.

The reinforcing member 450 may include a thick-walled portion 451 and a thin-walled portion 460. In an embodiment, the thick-walled portion 451 may be integrally joined to the end sidewall portions 141, and the thin-walled portion 460 may be integrally joined to the side sidewall portions 145.

The thick-walled portion 451 and the thin-walled portion 460 may each be provided in plural. For example, a pair of thick-walled portions 451 may be provided to correspond one-to-one to the end sidewall portions 141, and a pair of thin-walled portions 460 may be provided to correspond one-to-one to the side sidewall portions 145.

The thick-walled portion 451 may include a pair of parallel plate portions 452 and 453 and a plurality of rib portions 456. The pair of parallel plate portions 452 and 453 may include a first parallel plate portion 452 and a second parallel plate portion 453 that are parallel to each other. In an embodiment, shapes of the first parallel plate portion 452 and the second parallel plate portion 453 may be flat plate shapes orthogonal to the second direction, and the first parallel plate portion 452 and the second parallel plate portion 453 may extend in the third direction. The plurality of rib portions 456 may have a side and another side joined to the first parallel plate portion 452 and the second parallel plate portion 453 and may be disposed to be spaced apart from each other.

The pair of thin-walled portions 460 may extend in the second direction. The pair of thin-walled portions 460 may connect the pair of thick-walled portions 451. For example, both, or opposite, end portions of the pair of thick-walled portions 451 in the third direction may be connected to both, or opposite, end portions of the pair of thin-walled portions 460 in the second direction.

The thin-walled portion 460 may include a pair of thin-walled portion parallel plate portions 462 and 463 and a plurality of thin-walled portion rib portions 466. The pair of thin-walled portion parallel plate portions 462 and 463 may include a first thin-walled portion parallel plate portion 462 and a second thin-walled portion parallel plate portion 463 that is located farther from the battery cell stack 101 than the first thin-walled portion parallel plate portion 462.

The pair of thin-walled portion parallel plate portions 462 and 463 may be spaced apart by a distance less than the distance between the pair of parallel plate portions 452 and 453 of the thick-walled portion 451. The plurality of thin-walled portion rib portions 466 may have a side and another side joined to the pair of thin-walled portion parallel plate portions 462 and 463 and may be disposed to be spaced apart from each other in the second direction.

The thick-walled portion 451 may be embedded in the end sidewall portion 141 so as not to be exposed to an inner surface 1411 and an outer surface of the end sidewall portion 141 in the thickness direction. The thin-walled portion 460 may be exposed to the outside through the inner surface 1451 of the side sidewall portion 145 in the thickness direction. In this case, the first thin-walled portion parallel plate portion 462 of the thin-walled portion 460 may be exposed toward the battery cell stack 101 with the insulating wrapping 120 (see FIG. 1) interposed therebetween. The second thin-walled portion parallel plate portion 463 may not be exposed to the outside of the side sidewall portion 145 through the outer surface 1452 of the side sidewall portion 145 in the thickness direction.

When the reinforcing member 450 is made of a metal, the reinforcing member 450 may have better thermal conductivity than the sidewall portions 141 and 145 and the busbar holder portion 131 that are made of a synthetic resin material, thereby improving heat dissipation performance that discharges heat generated during the charging and discharging of the battery cell stack 101 to the outside of the module housing 130D.

As shown in FIGS. 15 and 16, the thin-walled portion 460 is provided with the pair of thin-walled portion parallel plate portions 462 and 463 and the plurality of thin-walled portion rib portions 466, a surface area is expanded, and the first thin-walled portion parallel plate portion 462 is exposed to the outside through the inner surface 1451 of the side sidewall portion 145 in the thickness direction, and the heat dissipation performance of the module housing 130D included in the present embodiment of the present invention may be further improved compared to the heat dissipation performance of the module housing 130A included in the embodiment of FIG. 1.

In addition, a thickness of the thin-walled portion 460 may be greater than a thickness of the thin-walled portion 160 of the reinforcing member 150 included in the embodiment of FIG. 1, and the rigidity of the module housing 130D included in the present embodiment of the present invention is increased compared to the rigidity of the module housing 130A included in the embodiment of FIG. 1.

A plurality of fastener passing bosses 170 may be provided. The plurality of fastener passing bosses 170 may pass through both, or opposite, longitudinal end portions of the thick-walled portions 451 in the first direction.

The potting material 136, the reinforcing member 450, and the fastener passing boss 170 may be inserted into a mold for molding the module housing 130D and joined to the busbar holder portion 131 or the sidewall portions 141 and 145 made of a synthetic resin material by insert molding.

According to one or more embodiments of the present invention, a module housing that accommodates battery cells therein may include a busbar holder portion and a sidewall portion that are integrally formed without being coupled using welding or fasteners. Therefore, assembly productivity of a battery module including the module housing can be improved, and manufacturing costs can be reduced.

According to one or more embodiments of the present invention, the module housing includes a reinforcing member integrally joined to the sidewall portion by insert molding, thereby further increasing the rigidity of the module housing. In addition, according to one or more embodiments of the present invention in which the reinforcing member includes a metal material, the heat dissipation performance of the battery module can be improved.

However, aspects and effects obtainable through the present disclosure are not limited to the above aspects and effects, and other technical aspects and effects that are not mentioned will be clearly understood by those skilled in the art from the description of the present disclosure.

Although the present invention has been described with reference to some example embodiments and drawings illustrating aspects thereof, the present invention is not limited thereto. Rather, various modifications and variations can be made by a person skilled in the art to which the present invention belongs within the technical scope of the present invention and the claims and equivalents thereto.
The present invention will now be defined with reference to the following clauses.
Clause 1. A battery module comprising:
   a battery cell stack including a plurality of battery cells;
   a plurality of busbars electrically connecting the plurality of battery cells; and
   a module housing made of a synthetic resin material, and including a busbar holder portion supporting the plurality of busbars, and a sidewall portion surrounding side surfaces of the battery cell stack that does not face the busbar holder portion and connected to the busbar holder portion.
Clause 2. The battery module of clause 1, wherein the module housing further includes a reinforcing member that is made of a material with a greater strength than the synthetic resin material and integrally joined to the sidewall portion.
Clause 3. The battery module of clause 2, wherein the reinforcing member is made of a metal material.
Clause 4. The battery module of clause 2 or clause 3, wherein the reinforcing member includes a thick-walled portion including a pair of parallel plate portions parallel to each other, and a plurality of rib portions that have one side and the other side joined to the pair of parallel plate portions and are disposed to be spaced apart from each other.
Clause 5. The battery module of clause 4, wherein the reinforcing member is provided with a plurality of thick-walled portions,
   the plurality of thick-walled portions are disposed to be spaced apart from each other, and
   the reinforcing member further includes a plurality of thin-walled portions connecting the plurality of thick-walled portions.
Clause 6. The battery module of clause 5, wherein the thin-walled portion includes a pair of thin-walled portion parallel plate portions that are spaced apart by a distance smaller than a distance between the pair of parallel plate portions and are parallel to each other, and a plurality of thin-walled portion rib portions that have one side and the other side joined to the pair of thin-walled portion parallel plate portions and are disposed to be spaced apart from each other. Clause 7. The battery module of any one of clauses 2 to 6, wherein the reinforcing member includes a plurality of protrusions protruding from one side surface facing the battery cell stack or the other side surface opposite to the one side surface.
Clause 8. The battery module of clause 7, wherein the plurality of protrusions protrude so as to be exposed to the outside of the sidewall portion.
Clause 9. The battery module of any one of clauses 2 to 8, wherein a portion of the reinforcing member is exposed to the outside of the sidewall portion.
Clause 10. The battery module of any one of clauses 2 to 9, wherein the reinforcing member is inserted into a mold for molding the module housing and joined to the sidewall portion by insert molding.
Clause 11. The battery module of any one of clauses 2 to 10, wherein the module housing further includes a fastener passing boss that is integrally joined to the sidewall portion and made of a material with a greater strength than the synthetic resin material, and
   the battery module further includes a fastener passing through the fastener passing boss.
Clause 12. The battery module of clause 11, wherein the fastener passing boss is inserted into a mold for forming the module housing and joined to the sidewall portion by insert molding. Clause 13. The battery module of clause 11 or clause 12, further comprising a cooling plate that cools the battery cell stack and is fastened to the fastener and coupled to the module housing.
Clause 14. The battery module of clause 11, wherein the fastener is fastened to a frame supporting the module housing.
Clause 15. The battery module of any one of clauses 1 to 14, wherein the battery cell includes a cell vent that ruptures so that gas is discharged from an inside of the battery cell to an outside, and
   the module housing further includes a potting material that closes a gas through hole aligned with the cell vent and is melted or ruptured by gas to open the gas through hole.
Clause 16. The battery module of clause 15, wherein a peripheral portion of the cell vent of the battery cell is in close contact with a peripheral portion of the potting material of the module housing.
Clause 17. The battery module of clause 15 or clause 16, wherein the potting material includes at least one of mica, aerogels, and ceramics.
Clause 18. The battery module of any one of clauses 15 to 17, wherein the potting material is inserted into a mold for forming the module housing and joined to the busbar holder portion by insert molding.
Clause 19. The battery module of any one of clauses 1 to 18, further comprising an insulating wrapping made of an insulating material and surrounding the battery cell stack.
Clause 20. The battery module of clause 19, wherein one side surface of the insulating wrapping is in close contact with the battery cell stack, and the other side surface of the insulating wrapping opposite to the one side is in close contact with an inner surface of the sidewall portion.

## Claims

1. A battery module comprising:
a battery cell stack comprising a plurality of battery cells;
a plurality of busbars electrically connecting the plurality of battery cells; and
a module housing made of a synthetic resin material, and comprising a busbar holder portion supporting the plurality of busbars, and a sidewall portion around side surfaces of the battery cell stack that does not face the busbar holder portion and connected to the busbar holder portion.

2. The battery module as claimed in claim 1, wherein the module housing further comprises a reinforcing member that is made of a material with a greater strength than the synthetic resin material and is integrally joined to the sidewall portion.

3. The battery module as claimed in claim 2, wherein the reinforcing member comprises a thick-walled portion comprising a pair of parallel plate portions parallel to each other, and a plurality of rib portions comprising a side and another side joined to the pair of parallel plate portions and arranged to be spaced apart from each other.

4. The battery module as claimed in claim 3, wherein the reinforcing member comprises a plurality of thick-walled portions spaced apart from each other, and
the reinforcing member further comprises a plurality of thin-walled portions connecting the plurality of thick-walled portions.

5. The battery module as claimed in any one of claims 2 to 4, wherein the reinforcing member comprises a plurality of protrusions protruding from a side surface facing the battery cell stack or another side surface opposite to the side surface.

6. The battery module as claimed in claim 5, wherein the plurality of protrusions protrude so as to be exposed to an outside of the sidewall portion.

7. The battery module as claimed in any one of claims 2 to 6, wherein a portion of the reinforcing member is exposed to an outside of the sidewall portion.

8. The battery module as claimed in any one of claims 2 to 7, wherein the reinforcing member is inserted in a mold for molding the module housing and joined to the sidewall portion by insert molding.

9. The battery module as claimed in any one of claims 2 to 8, wherein the module housing further comprises a fastener passing boss that is integrally joined to the sidewall portion and made of a material with a greater strength than the synthetic resin material, and
the battery module further comprises a fastener passing through the fastener passing boss.

10. The battery module as claimed in claim 9, further comprising a cooling plate that cools the battery cell stack and is fastened to the fastener and coupled to the module housing.

11. The battery module as claimed in any one of claims 1 to 10, wherein a battery cell of the plurality of battery cells comprises a cell vent configured to rupture such that gas is discharged from an inside of the battery cell to an outside, and
the module housing further comprises a potting material that closes a gas through hole aligned with the cell vent and is configured to be melted or ruptured by gas to open the gas through hole.

12. The battery module as claimed in claim 11, wherein a peripheral portion of the cell vent of the battery cell is in contact with a peripheral portion of the potting material of the module housing.

13. The battery module as claimed in claim 11 or claim 12, wherein the potting material comprises at least one of mica, an aerogel, or a ceramic.

14. The battery module as claimed in any one of claims 1 to 13, further comprising an insulating wrapping made of an insulating material and arranged around the battery cell stack.

15. The battery module as claimed in claim 14, wherein a side surface of the insulating wrapping is in contact with the battery cell stack, and another side surface of the insulating wrapping opposite to the side surface is in contact with an inner surface of the sidewall portion.
